# EUROPEAN PATENT APPLICATION

(11) **EP 4 817 953 A1**
(43) Date of publication of application: **07.10.2026**
(21) Application number: 24897513.8
(22) Date of filing: 26.11.2024
(51) Int. Cl.: B60Q 1/14

(54) **VEHICLE HEADLIGHT DEVICE**

(30) Priority: 30.11.2023 JP 2023203388
(71) Applicant: Ichikoh Industries, Ltd., Isehara-shi, Kanagawa 259-1192 (JP)
(72) Inventor: WASHI, Yuichiro, Isehara-shi, Kanagawa 259-1192 (JP); KURIMOTO, Hideto, Isehara-shi, Kanagawa 259-1192 (JP); HAMAMOTO, Takanori, Isehara-shi, Kanagawa 259-1192 (JP)
(74) Representative: Schön, Christoph
(86) International application number: PCT/JP2024/041713
(87) International publication number: WO 2025/115828

(57) **Abstract**

Provided is a vehicle headlight device capable of reducing driver fatigue during nighttime driving. The present invention is provided with a left-side lamp unit 2L and a right-side lamp unit 2R that project a high-beam light distribution pattern HP in front of a vehicle, and a control device 3. The control device 3 controls the left-side lamp unit 2L and the right-side lamp unit 2R on the basis of data on a light-blocked area A1 obtained in an on-vehicle camera device 4 so as to form, in the high-beam light distribution pattern HP, the light-blocked area A1 and also a light-dark gradual change area A2 on four sides around the entire circumference of the light-blocked area A1. As a result, the invention can reduce driver fatigue during nighttime driving.

## Description

### Technical Field

The present invention relates to a vehicle headlamp device of a variable light distribution type.

### Background Art

Examples of a vehicle headlamp device of a variable light distribution type include those disclosed in Patent Literature 1 and Patent Literature 2. A vehicle headlamp of Patent Literature 1 and a headlamp control device of Patent Literature 2 are described below.

The vehicle headlamp of Patent Literature 1 irradiates a front of a vehicle with a high-beam light distribution pattern, and when an in-vehicle camera detects an object such as an oncoming vehicle or a preceding vehicle, forms a light-shielding range for shielding a range of the object from light in the high-beam light distribution pattern. Thus, the vehicle headlamp of Patent Literature 1 does not give glare to a driver of the object.

Further, in a case in which a careless driving state is determined by a driver state determination device, the headlamp control device of Patent Literature 2 reduces an amount of light in an irradiation region corresponding to a preceding vehicle when presence of the preceding vehicle is determined by a preceding vehicle determination device, and increases an amount of light in a high-beam region above a peripheral region of the irradiation region corresponding to the preceding vehicle when an inter-vehicle distance from the preceding vehicle is equal to or greater than a predetermined value. Thus, the headlamp control device of Patent Literature 2 can encourage the driver to drive with a moderate level of concentration. In the headlamp control device of Patent Literature 2, when the inter-vehicle distance from the preceding vehicle is equal to or greater than the predetermined value, high-beam regions (see reference symbols "U1 (RB)," "U2 (RB)," "U5 (RB)," and "U6 (RB)" of "FIG. 4" of Patent Literature 2) above peripheral regions (see reference symbols "R1," "R2," "R5," and "R6" of the same figure) of irradiation regions (see reference symbols "R3 (RA)" and "R4 (RA)" of the same figure) corresponding to the preceding vehicle are increased in amount of light, while a region above the irradiation regions, which corresponds to the preceding vehicle, is a non-irradiation region (region in which the "preceding vehicle" is illustrated of the same figure) that is not irradiated with light.

### Citation List

### Patent Literature

[PTL 1] JP 2019-89386 A
[PTL 2] JP 2017-171161 A

### Summary of Invention

### Technical Problem

However, the vehicle headlamp of Patent Literature 1 forms a light-shielding range in a high-beam light distribution pattern, and hence a difference in brightness is large at a boundary between the light-shielding range in which light is shielded and a range in which the light is not shielded in the high-beam light distribution pattern. Moreover, in the vehicle headlamp of Patent Literature 1, in accordance with movement of an object, the light-shielding range changes in the high-beam light distribution pattern as well, and when there are a plurality of objects, there are a plurality of light-shielding ranges as well. Thus, the vehicle headlamp of Patent Literature 1 is in a situation that causes fatigue to a driver during night driving.

Further, the headlamp control device of Patent Literature 2 increases an amount of light in a high-beam region above a peripheral region of an irradiation region corresponding to a preceding vehicle when an inter-vehicle distance from the preceding vehicle is equal to or greater than a predetermined value, and hence a difference in brightness is large at a boundary between the high-beam region that is increased in amount of light and a non-irradiation region that is not irradiated with light. Thus, in the same manner as the vehicle headlamp of Patent Literature 1 described above, the headlamp control device of Patent Literature 2 is in a situation that causes fatigue to a driver during night driving.

An object to be achieved by the present invention is to provide a vehicle headlamp device that can reduce fatigue caused to a driver during night driving.

### Solution to Problem

In order to achieve the above-mentioned object, a vehicle headlamp device according to a first aspect of the present invention is a vehicle headlamp device of a variable light distribution type, the vehicle headlamp device including: a lamp unit configured to irradiate a front of a vehicle with a high-beam light distribution pattern; and a control device configured to control the lamp unit based on information obtained by a detection device mounted on the vehicle to form a light-shielding range in the high-beam light distribution pattern and to form a gradual brightness change range in at least a part of an irradiation range adjacent to the light-shielding range.

In the vehicle headlamp device according to the present invention, it is preferred that the control device be configured to output, to the lamp unit, a control signal for increasing a width of the gradual brightness change range, when information relating to a degree of fatigue of a driver is input from an information unit mounted on the vehicle and it is determined that the information relating to the degree of fatigue of the driver is equal to or greater than a threshold value.

In the vehicle headlamp device according to the present invention, it is preferred that the information relating to the degree of fatigue of the driver be at least any one of a traveling time or a traveling distance among pieces of vehicle information obtained by the information unit, and that the control device be configured to output, to the lamp unit, the control signal for increasing the width of the gradual brightness change range, when a value of at least any one of the traveling time or the traveling distance that is equal to or greater than the threshold value is input from the information unit.

In the vehicle headlamp device according to the present invention, it is preferred that the control device be configured to obtain environment information on the vehicle from the information unit, and decrease the threshold value when the obtained environment information is information relating to adverse weather.

In the vehicle headlamp device according to the present invention, it is preferred that the information relating to the degree of fatigue of the driver be at least any one of a traveling time or a traveling distance among pieces of vehicle information obtained by the information unit, and that the control device be configured to obtain the environment information on the vehicle from the information unit, and decrease the threshold value when the obtained environment information is information relating to adverse weather.

In the vehicle headlamp device according to the present invention, it is preferred that the control device be configured to output, to the lamp unit, a control signal for increasing a width of the gradual brightness change range on a side on which an oncoming vehicle travels compared to a width of the gradual brightness change range on another side.

In the vehicle headlamp device according to the present invention, it is preferred that the control device be configured to output, to the lamp unit, a control signal for setting a gradual change form of a brightness of the gradual brightness change range to at least one form of a linear form, a curve-like form, or a stepwise form.

In the vehicle headlamp device according to the present invention, it is preferred that the control device be configured to output, to the lamp unit, a control signal for increasing or decreasing a width of the gradual brightness change range in accordance with widening or narrowing of the light-shielding range.

In the vehicle headlamp device according to the present invention, it is preferred that the control device include: a setting unit configured to set the light-shielding range and the gradual brightness change range based on the information input from the detection device; and a light intensity adjustment unit configured to adjust a light intensity of light emitted from the lamp unit based on the light-shielding range and the gradual brightness change range that are set by the setting unit.

### Advantageous Effects of Invention

The vehicle headlamp device according to the present invention can reduce fatigue caused to the driver during night driving.

### Brief Description of Drawings

FIG. 1 is a block diagram of constituent components for illustrating an embodiment of a vehicle headlamp device according to the present invention.
FIG. 2 is an explanatory diagram for illustrating a high-beam light distribution pattern exhibited when an ADB is not used and a brightness (luminance) in the high-beam light distribution pattern.
FIG. 3 is an explanatory diagram for illustrating a high-beam light distribution pattern exhibited when the ADB is used and a brightness (luminance) in the high-beam light distribution pattern.
FIG. 4 is an explanatory diagram for illustrating a high-beam light distribution pattern exhibited when the ADB is used and a width of a gradual brightness change range is increased and a brightness (luminance) in the high-beam light distribution pattern.
FIG. 5 is an explanatory flow chart for illustrating a control flow of a control device.
FIGS. 6 are each an explanatory graph for showing a gradual change form of a brightness between a light-shielding range and an irradiation range in the gradual brightness change range, in which FIG. 6(A) is an explanatory graph for showing a concave-downward-curve-like form, FIG. 6(B) is an explanatory graph for showing a concave-upward-curve-like form, and FIG. 6(C) is an explanatory graph for showing a stepwise form.
FIGS. 7 are each an explanatory diagram for illustrating the width of the gradual brightness change range accompanying the light-shielding range for shielding an oncoming vehicle from light, in which FIG. 7(A) is an explanatory diagram for illustrating the width of the gradual brightness change range exhibited when the oncoming vehicle is located far away, and FIG. 7(B) is an explanatory diagram for illustrating the width of the gradual brightness change range exhibited when the oncoming vehicle is located close by.

### Description of Embodiments

Now, an embodiment (Example) and a modification example of a vehicle headlamp device according to the present invention are described with reference to the accompanying drawings. This embodiment and this modification example do not limit the present invention. In addition, constituent elements in the following embodiment and modification example include those that can be easily substituted by a person skilled in the art or those that are substantially identical.

In the present specification, front, rear, upper, lower, left, and right are front, rear, upper, lower, left, and right in a vehicle-mounted state in which the vehicle headlamp device according to the present invention is mounted on a vehicle. Further, directions in a front-rear direction, an up-down direction, and a left-right direction are directions in the vehicle-mounted state in which the vehicle headlamp device is mounted on the vehicle, the directions representing directions defined when a traveling direction of the vehicle is viewed from a driver's seat. The front-rear direction is a traveling direction (a forward direction and a backward direction) of the vehicle. The up-down direction is parallel to a vertical direction. The left-right direction is a horizontal direction. In regard to a front-facing direction and a rear-facing direction, a direction in which light is emitted from the vehicle headlamp device is set as the front-facing direction, and a direction opposite to the front direction is set as the rear-facing direction.

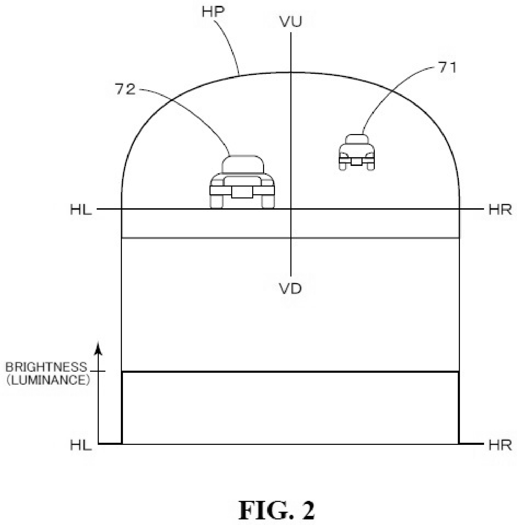

FIG. 2, FIG. 3, FIG. 4, FIG. 7(A), and FIG. 7(B) are explanatory diagrams for illustrating light distribution patterns projected onto a screen installed 10 m or 25 m ahead of the vehicle headlamp device according to the present invention in the front-facing direction. In FIG. 2, FIG. 3, FIG. 4, FIG. 7(A), and FIG. 7(B), reference symbol "VU-VD" indicates a vertical line extending between an upper side to a lower side of the screen, and reference symbol "HL-HR" indicates a horizontal line extending between a left side to a right side of the screen. Here, the screen has a grid at intervals of 1° (1 deg). An "angle" as used herein is expressed as a width in the left-right direction and a width in the up-down direction on the screen.

### (Description of Configuration of Embodiment)

A configuration of the vehicle headlamp device according to this embodiment is described below.

### (Description of Vehicle Headlamp Device 1)

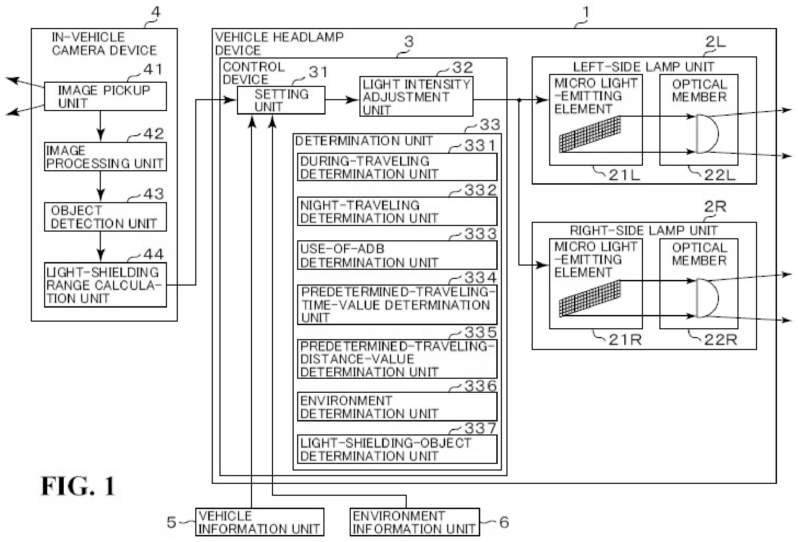

FIG. 1 is a block diagram for illustrating constituent components of a vehicle headlamp device 1 according to this embodiment. The vehicle headlamp device 1 is a vehicle headlamp device of an adaptive driving beam (ADB) type, that is, a variable light distribution type. The vehicle headlamp device 1 is mounted on a vehicle (not shown). The vehicle headlamp device 1 includes a left-side lamp unit 2L, a right-side lamp unit 2R, and a control device 3.

On the vehicle on which the vehicle headlamp device 1 is mounted, as illustrated in FIG. 1, a vehicle information unit 5 and an environment information unit 6, which serve as information units, and an in-vehicle camera device 4 are mounted.

### (Description of Left-side Lamp Unit 2L and Right-side Lamp Unit 2R)

The left-side lamp unit 2L is mounted on a left side of a front portion of the vehicle. The right-side lamp unit 2R is mounted on a right side of the front portion of the vehicle. As illustrated in FIG. 2, FIG. 3, FIG. 4, FIG. 7(A), and FIG. 7(B), the left-side lamp unit 2L and the right-side lamp unit 2R irradiate a front of the vehicle with a high-beam light distribution pattern HP. As illustrated in FIG. 1, the left-side lamp unit 2L and the right-side lamp unit 2R include micro light-emitting elements 21L and 21R and optical members 22L and 22R, respectively.

The micro light-emitting elements 21L and 21R are each formed of tens of thousands of light emitting diodes (LEDs) (hereinafter sometimes referred to simply as "LEDs"). The LEDs are arranged in a matrix. The numbers of micro light-emitting elements 21L and 21R are not particularly limited.

The LEDs individually emit light, and vary in brightness depending on a value of an electric current supplied thereto. That is, a light intensity, that is, a brightness, of light emitted from each LED is adjusted by adjusting a value of an electric current supplied to each individual LED or by modulating a pulse width of electric power supplied to each individual LED.

The optical members 22L and 22R are lenses in this example. The lenses irradiate the front of the vehicle with light from the micro light-emitting elements 21L and 21R directly as the high-beam light distribution pattern HP.

The optical members 22L and 22R are not limited to the lenses in this example. The optical members 22L and 22R may be reflective surfaces such as reflectors that reflect light from the micro light-emitting elements 21L and 21R to irradiate the front of the vehicle with the light as the high-beam light distribution pattern HP, may be a combination of lenses and reflectors, or may be a combination with another optical member.

### (Description of Control Device 3)

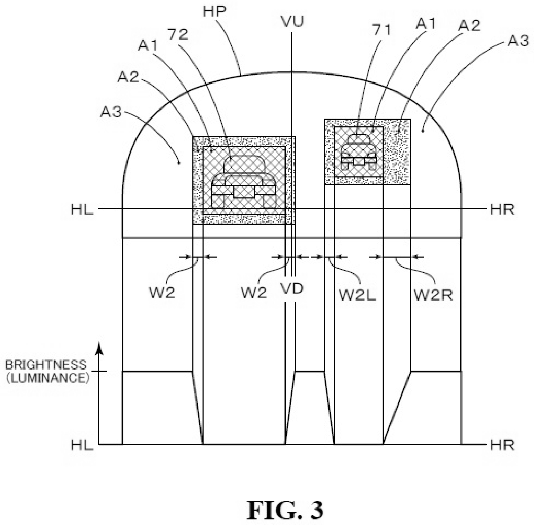

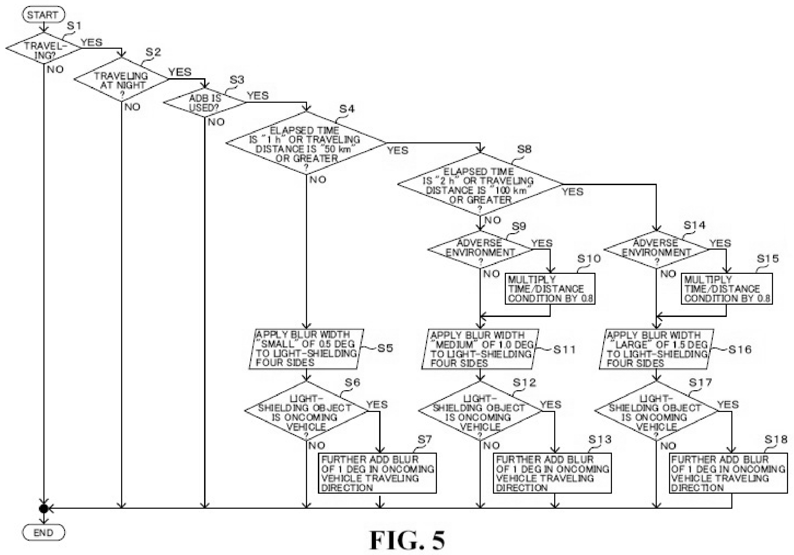

The control device 3 controls, based on data on a light-shielding range obtained by the in-vehicle camera device 4, the left-side lamp unit 2L and the right-side lamp unit 2R to form a light-shielding range A1 in the high-beam light distribution pattern HP and to form a gradual brightness change range A2 around an entire periphery of the light-shielding range A1, as illustrated in FIG. 3, FIG. 4, FIG. 7(A), and FIG. 7(B). The control device 3 performs such control as described later with reference to a flow chart of FIG. 5.

The control device 3 is formed of a computer. The control device 3 includes a central processing unit (CPU) (not shown), memories (including a random access memory (RAM), a read only memory (ROM), and a storage) (not shown), and a graphics processing unit (GPU) (not shown). The storage corresponds to various non-volatile memories including a hard disk drive (HDD) and a solid state drive (SSD), and may be removable from the computer. The control device 3 also includes an input unit (not shown) for inputting data (information) from external devices such as the in-vehicle camera device 4, the vehicle information unit 5, and the environment information unit 6, and an output unit (not shown) for outputting data (control signals) from the control device 3 to external devices such as the left-side lamp unit 2L and the right-side lamp unit 2R. The input unit and the output unit allow input from and output to the external devices through wired communication or wireless communication.

Through cooperation between software stored in the above-mentioned memories and hardware forming the above-mentioned computer, the control device 3 includes, as illustrated in FIG. 1, a setting unit 31, a light intensity adjustment unit 32, and a determination unit 33. The setting unit 31 sets the light-shielding range A1 and the gradual brightness change range A2 based on data on the light-shielding range obtained by the in-vehicle camera device 4, vehicle information obtained by the vehicle information unit 5, and environment information on the vehicle obtained by the environment information unit 6.

The light intensity adjustment unit 32 adjusts a light intensity of light emitted from the micro light-emitting element 21L of the left-side lamp unit 2L and a light intensity of light emitted from the micro light-emitting element 21R of the right-side lamp unit 2R based on the light-shielding range A1 and the gradual brightness change range A2 that are set by the setting unit 31. When an electric current is individually supplied to each of the micro light-emitting elements 21L and 21R formed of the LEDs, the light intensity adjustment unit 32 adjusts the value of the supplied electric current or modulates the pulse width of the supplied electric power, to thereby adjust a light intensity (brightness) of the light emitted from each LED.

The determination unit 33 includes a during-traveling determination unit 331 (hereinafter referred to as "traveling determination unit 331"), a night-traveling determination unit 332 (hereinafter referred to as "night determination unit 332"), a use-of-ADB determination unit 333 (hereinafter referred to as "ADB determination unit 333"), a predetermined-traveling-time-value determination unit 334 (hereinafter referred to as "time determination unit 334") or a predetermined-traveling-distance-value determination unit 335 (hereinafter referred to as "distance determination unit 335"), an environment determination unit 336, and a light-shielding-object determination unit 337 (hereinafter referred to as "light-shielding determination unit 337").

The traveling determination unit 331 determines whether or not an own vehicle, that is, a vehicle on which the vehicle headlamp device 1 according to this embodiment is mounted is traveling. In this example, whether or not the own vehicle is traveling is determined based on whether or not an engine is being driven.

The night determination unit 332 determines whether or not the own vehicle is traveling at night. In this example, whether or not the own vehicle is traveling at night is determined based on whether or not a lighting switch (lamp switch) is on.

The ADB determination unit 333 determines whether or not an ADB is used. In this example, whether or not the ADB is used is determined based on whether or not the own vehicle is traveling at a speed of 30 km or higher in a situation in which an operation relating to use of an ADB function in the vehicle has been performed.

The time determination unit 334 determines whether or not a traveling time has reached a predetermined value serving as a threshold value (hereinafter referred to as "predetermined value"). In this example, whether or not the traveling time has reached the predetermined value is determined based on whether or not a time from a start of the engine has reached a predetermined time (for example, whether or not one hour has elapsed or whether or not two hours have elapsed). Here, the traveling time is the time from the start of the engine.

The distance determination unit 335 determines whether or not a traveling distance has reached a predetermined value serving as a threshold value (hereinafter referred to as "predetermined value"). In this example, whether or not the traveling distance has reached the predetermined value is determined based on whether or not a distance from the start of the engine has reached the predetermined distance (for example, whether or not the distance has reached 50 km or whether or not the distance has reached 100 km). Here, the traveling distance is the distance from the start of the engine.

The environment determination unit 336 determines whether or not the environment is an adverse environment such as rain or snow. In this example, whether or not the environment is the adverse environment is determined based on image processing data from the in-vehicle camera device 4.

The light-shielding determination unit 337 determines whether or not a light-shielding object is an oncoming vehicle 71. In this example, whether or not the light-shielding object is the oncoming vehicle 71 is determined based on the image processing data from the in-vehicle camera device 4.

### (Description of In-vehicle Camera Device 4)

As illustrated in FIG. 1, the in-vehicle camera device 4 includes an image pickup unit 41, an image processing unit 42, an object detection unit 43, and a light-shielding range calculation unit 44.

The in-vehicle camera device 4 includes a computer. The computer included in the in-vehicle camera device 4 includes a central processing unit (CPU) (not shown), memories (including a random access memory (RAM), a read only memory (ROM), and a storage) (not shown), and a graphics processing unit (GPU) (not shown). The storage corresponds to various non-volatile memories including a hard disk drive (HDD) and a solid state drive (SSD), and may be removable from the computer. The in-vehicle camera device 4 also includes a data output unit (not shown) for transmitting and receiving data to/from external devices and outputting data from the in-vehicle camera device 4. The data output unit may be a connection unit for connection to a portable memory, or may be a communication unit that performs communication through wired communication or wireless communication. Further, the external device may be a portable memory, and data stored in such a memory may be read into the in-vehicle camera device 4.

The image pickup unit 41 picks up image information on the front of the vehicle, and outputs picked-up image information as image pickup information data to the image processing unit 42.

The image processing unit 42 processes the information on the front of the vehicle as image data based on the image pickup information data output from the image pickup unit 41, and outputs the image data to the object detection unit 43.

The object detection unit 43 detects, based on the image data output from the image processing unit 42, an object to be shielded from light, in this example, the oncoming vehicle 71 and a preceding vehicle 72 illustrated in FIG. 2, FIG. 3, FIG. 4, FIG. 7(A), and FIG. 7(B), and outputs detected object data to the light-shielding range calculation unit 44.

The object detection unit 43 can identify, for each of the detected oncoming vehicle 71 and the detected preceding vehicle 72, a vehicle type, for example, a sedan, a light motor vehicle, or a truck. In addition to the oncoming vehicle 71 and the preceding vehicle 72 in this example, the objects to be shielded from light may include, for example, a pedestrian, a motorcycle, a bicycle, or a signboard.

The light-shielding range calculation unit 44 calculates each light-shielding range A1 (each range provided with grid hatching in FIG. 3, FIG. 4, FIG. 7(A), and FIG. 7(B)) based on the object data output from the object detection unit 43, and outputs the calculated light-shielding range data to the setting unit 31 of the control device 3. The light-shielding range data (light-shielding range A1) is displayed as orthogonal coordinates of an X-axis and a Y-axis. This enables the light-shielding range A1 to be accurately formed in the high-beam light distribution pattern HP emitted from the left-side lamp unit 2L and the right-side lamp unit 2R, which are separately mounted on the left side and the right side.

### (Description of Vehicle Information Unit 5 and Environment Information Unit 6)

The vehicle information unit 5 obtains any one of a traveling time or a traveling distance as the vehicle information, and outputs the vehicle information on the traveling time or the traveling distance to the setting unit 31 of the control device 3. The environment information unit 6 obtains information relating to adverse weather such as rain or snow as the environment information on the vehicle, and outputs the information relating to the adverse weather such as rain or snow as adverse environment information to the setting unit 31 of the control device 3.

### (Description of Light-shielding Range A1, Gradual Brightness Change Range A2, and Irradiation Range A3)

As illustrated in portions provided with grid hatching in FIG. 3, FIG. 4, FIG. 7(A), and FIG. 7(B), the light-shielding range (light-shielding region) A1 is formed in a rectangular range (region) covering the oncoming vehicle 71 and the preceding vehicle 72, which are the light-shielding objects, in the high-beam light distribution pattern HP. In regard to the light-shielding range A1, in this example, the value of the electric current supplied to the micro light-emitting elements 21L and 21R corresponding to the light-shielding range A1 is 0%, and the micro light-emitting elements 21L and 21R corresponding to the light-shielding range A1 are in an unlit state, thereby preventing light from being emitted from the micro light-emitting elements 21L and 21R corresponding to the light-shielding range A1. Thus, the brightness (luminance) of the light-shielding range A1 is at a low level (0 level or 0%; hereinafter referred to as "0%").

As illustrated in portions provided with dots in FIG. 3, FIG. 4, FIG. 7(A), and FIG. 7(B), the gradual brightness change range (gradual brightness change region) A2 is formed in a frame-shaped range (region) around the entire periphery of the light-shielding range A1 in the high-beam light distribution pattern HP. In regard to the gradual brightness change range A2, in this example, the value of the electric current supplied to the micro light-emitting elements 21L and 21R corresponding to the gradual brightness change range A2 or the pulse width of the electric power supplied thereto is 0% or greater and 100% or lower (hereinafter referred to as "0% to 100%"), and the micro light-emitting elements 21L and 21R corresponding to the gradual brightness change range A2 are in a partially lit state, thereby causing light to be emitted at 0% to 100% from the micro light-emitting elements 21L and 21R corresponding to the gradual brightness change range A2. Thus, the brightness (luminance) of the gradual brightness change range A2 ranges from a level equal to or greater than a low level (0 level or 0%) to a level equal to or lower than a high level (100%) (hereinafter referred to as "0% to 100%"). The gradual brightness change range A2 in this example is formed in an irradiation range A3 adjacent to the light-shielding range A1 over the entire periphery of the light-shielding range A1.

Here, in FIG. 3, FIG. 4, FIG. 7(A), and FIG. 7(B), a width of a left-side portion and a width of a right-side portion of the gradual brightness change range A2 on the preceding vehicle 72 side are set as W2 and W20, a width of a left-side portion of the gradual brightness change range A2 on the oncoming vehicle 71 side is set as W2L, W20L, and W21L, and a width of a right-side portion of the gradual brightness change range A2 on the oncoming vehicle 71 side is set as W2R, W20R, and W21R. In this example, the right side of the gradual brightness change range A2 on the oncoming vehicle 71 side is a side toward a traveling direction of the oncoming vehicle 71.

A width of an upper-side portion and a width of a lower-side portion of the gradual brightness change range A2 on the preceding vehicle 72 side are equivalent to the widths W2 and W20 of a left-side portion of the gradual brightness change range A2 on the preceding vehicle 72 side and the widths W2 and W20 of a right-side portion of the gradual brightness change range A2 on the preceding vehicle 72 side. The width of the upper-side portion and the width of the lower-side portion of the gradual brightness change range A2 on the preceding vehicle 72 side are not required to be equivalent to the widths W2 and W20 of the left-side portion and the widths W2 and W20 of the right-side portion.

A width of an upper-side portion and a width of a lower-side portion of the gradual brightness change range A2 on the oncoming vehicle 71 side are equivalent to the widths W2L, W20L, and W21L of a left-side portion of the gradual brightness change range A2 on the oncoming vehicle 71 side. The width of the upper-side portion and the width of the lower-side portion of the gradual brightness change range A2 on the oncoming vehicle 71 side are not required to be equivalent to the widths W2L, W20L, and W21L of the left-side portion.

As illustrated in FIG. 3, FIG. 4, FIG. 7(A), and FIG. 7(B), the irradiation range (irradiation region) A3 is formed in a range (region) other than the light-shielding range A1 and the gradual brightness change range A2 in the high-beam light distribution pattern HP. In regard to the irradiation range A3, in this example, the value of the electric current supplied to the micro light-emitting elements 21L and 21R corresponding to the irradiation range A3 is 100%, and the micro light-emitting elements 21L and 21R corresponding to the irradiation range A3 are in a lit state, thereby causing light to be emitted at 100% from the micro light-emitting elements 21L and 21R corresponding to the irradiation range A3. Thus, the brightness (luminance) of the irradiation range A3 is at a high level (100%; hereinafter referred to as "100%").

### (Description of Actions of Embodiment)

The vehicle headlamp device 1 according to this embodiment has such a configuration as described above, and actions thereof are described below based on the flow chart of FIG. 5.

In Step S1, the traveling determination unit 331 determines whether or not an own vehicle is traveling. When the traveling determination unit 331 determines that the vehicle is not traveling (NO), the process of the flow chart illustrated in FIG. 5 ends, and when the traveling determination unit 331 determines that the own vehicle is traveling (YES), the process advances to Step S2.

In Step S2, the night determination unit 332 determines whether or not the own vehicle is traveling at night. When the night determination unit 332 determines that the own vehicle is not traveling at night (NO), the process of the flow chart illustrated in FIG. 5 ends. When the night determination unit 332 determines that the own vehicle is traveling at night (YES), the process advances to Step S3, and when the process advances to Step S3, the control device 3 turns on, through the light intensity adjustment unit 32, the micro light-emitting elements 21L and 21R of the left-side lamp unit 2L and the right-side lamp unit 2R. Then, as illustrated in FIG. 2, the left-side lamp unit 2L and the right-side lamp unit 2R irradiate the front of the own vehicle with the high-beam light distribution pattern HP.

In Step S3, the ADB determination unit 333 determines whether or not the ADB is used. When the ADB determination unit 333 determines that the ADB is not used (NO), the process of the flow chart illustrated in FIG. 5 ends, and when the ADB determination unit 333 determines that the ADB is used (YES), the process advances to Step S4.

In Step S4, the time determination unit 334 determines whether or not the traveling time has reached a predetermined value of one hour. When the time determination unit 334 determines that the traveling time has not reached one hour (NO), the process advances to Step S5, and when the time determination unit 334 determines that the traveling time has reached one hour (YES), the process advances to Step S8.

Alternatively, in Step S4, the distance determination unit 335 determines whether or not the traveling distance has reached a predetermined value of 50 km. When the distance determination unit 335 determines that the traveling distance has not reached 50 km (NO), the process advances to Step S5, and when the distance determination unit 335 determines that the traveling distance has reached 50 km (YES), the process advances to Step S8.

When Step S4 results in YES and it is determined in Step S9 described later that the environment is an adverse environment such as rain or snow (YES), the time determination unit 334 determines, through Step S10 described later, whether or not the traveling time has reached a predetermined value of 0.8 hour (48 minutes). When the time determination unit 334 determines that the traveling time has not reached 0.8 hour (48 minutes) (NO), the process advances to Step S5, and when the time determination unit 334 determines that the traveling time has reached 0.8 hour (48 minutes) (YES), the process advances to Step S8.

Alternatively, when Step S4 results in YES and it is determined in Step S9 described later that the environment is an adverse environment such as rain or snow (YES), the distance determination unit 335 determines, through Step S10 described later, whether or not the traveling distance has reached a predetermined value of 40 km. When the distance determination unit 335 determines that the traveling distance has not reached 40 km (NO), the process advances to Step S5, and when the distance determination unit 335 determines that the traveling distance has reached 40 km (YES), the process advances to Step S8.

In Step S5, the setting unit 31 sets the light-shielding range A1 and the gradual brightness change range A2 based on the data on the light-shielding range input from the in-vehicle camera device 4. As illustrated in FIG. 3, the light-shielding range A1 is a rectangular range covering the object to be shielded from light, in this example, each of the oncoming vehicle 71 and the preceding vehicle 72. As illustrated in FIG. 3, the gradual brightness change range A2 is a range surrounding the entire periphery, namely, four sides, of each light-shielding range A1. In this example, the widths W2 and W2L of the gradual brightness change ranges A2 are 0.5° (0.5 deg).

Further, the light intensity adjustment unit 32 adjusts the light intensities of light emitted from the micro light-emitting elements 21L and 21R of the left-side lamp unit 2L and the right-side lamp unit 2R based on the light-shielding range A1 and the gradual brightness change range A2 that are set by the setting unit 31. In this example, the light intensities of light emitted from the micro light-emitting elements 21L and 21R corresponding to each light-shielding range A1 are set to 0%, the light intensities of light emitted from the micro light-emitting elements 21L and 21R corresponding to the irradiation range A3 are set to 100%, and the light intensities of light emitted from the micro light-emitting elements 21L and 21R corresponding to each gradual brightness change range A2 are set to 0% or more and 100% or less from the light-shielding range A1 side toward the irradiation range A3 side.

Thus, as illustrated in FIG. 3, in the high-beam light distribution pattern HP, the light-shielding ranges A1 respectively covering the oncoming vehicle 71 and the preceding vehicle 72 are formed, and the gradual brightness change ranges A2 are formed at the four sides of the entire peripheries of the light-shielding ranges A1. Further, as illustrated in FIG. 3, in the high-beam light distribution pattern HP, the brightness (luminance) corresponding to the light-shielding range A1 is at the low level, the brightness (luminance) corresponding to the irradiation range A3 is at the high level, and the brightness (luminance) corresponding to the gradual brightness change range A2 is gradually changed in a linear manner from the low level to the high level, from the light-shielding range A1 side toward the irradiation range A3 side.

When Step S5 is completed, the process advances to Step S6. In Step S6, the light-shielding determination unit 337 determines whether or not the light-shielding object is the oncoming vehicle 71. When the light-shielding determination unit 337 determines that the light-shielding object is not the oncoming vehicle 71 (NO), the process of the flow chart illustrated in FIG. 5 ends, and when the light-shielding determination unit 337 determines that the light-shielding object is the oncoming vehicle 71 (YES), the process advances to Step S7.

In Step S7, the setting unit 31 sets the gradual brightness change range A2 in which, among the widths of the gradual brightness change range A2 attached to the light-shielding range A1 covering the oncoming vehicle 71, the width W2R on a side on which the oncoming vehicle 71 travels, in this example, on the right side, is additionally increased by a width of 1° (1 deg). Further, the light intensity adjustment unit 32 adjusts the light intensities of light emitted from the micro light-emitting elements 21L and 21R of the left-side lamp unit 2L and the right-side lamp unit 2R, based on the gradual brightness change range A2 set by the setting unit 31, that is, the gradual brightness change range A2 in which the width W2R on the right side is additionally increased by the width of 1° (1 deg) as compared to the width W2L on the other side.

Thus, as illustrated in FIG. 3, the width W2R on the right side of the gradual brightness change range A2 attached to the light-shielding range A1 covering the oncoming vehicle 71 is additionally increased by 1° (1 deg) as compared to the width W2L (0.5° (0.5 deg)) on the other side, and thus becomes 1.5° (1.5 deg). Then, Step S7 ends.

In Step S8, the time determination unit 334 determines whether or not the traveling time has reached a predetermined value of two hours. When the time determination unit 334 determines that the traveling time has not reached two hours (NO), the process advances to Step S9, and when the time determination unit 334 determines that the traveling time has reached two hours (YES), the process advances to Step S14.

Alternatively, in Step S8, the distance determination unit 335 determines whether or not the traveling distance has reached a predetermined value of 100 km. When the distance determination unit 335 determines that the traveling distance has not reached 100 km (NO), the process advances to Step S9, and when the distance determination unit 335 determines that the traveling distance has reached 100 km (YES), the process advances to Step S14.

When Step S8 results in YES and it is determined in Step S14 described later that the environment is an adverse environment such as rain or snow (YES), the time determination unit 334 determines, through Step S15 described later, whether or not the traveling time has reached a predetermined value of 1.6 hours (96 minutes or one hour and 36 minutes). When the time determination unit 334 determines that the traveling time has not reached 1.6 hours (96 minutes or one hour and 36 minutes) (NO), the process advances to Step S9, and when the time determination unit 334 determines that the traveling time has reached 1.6 hours (96 minutes or one hour and 36 minutes) (YES), the process advances to Step S14.

Alternatively, in Step S8, when it is determined in Step S14 described later that the environment is an adverse environment such as rain or snow (YES), the distance determination unit 335 determines, through Step S15 described later, whether or not the traveling distance has reached a predetermined value of 80 km. When the distance determination unit 335 determines that the traveling distance has not reached 80 km (NO), the process advances to Step S9, and when the distance determination unit 335 determines that the traveling distance has reached 80 km (YES), the process advances to Step S14.

In Step S9, the environment determination unit 336 determines whether or not the environment is an adverse environment such as rain or snow. When the environment determination unit 336 determines that the environment is the adverse environment (YES), the process advances to Step S10, and when the environment determination unit 336 determines that the environment is not the adverse environment (NO), the process advances to Step S11.

In Step S10, the control device 3 multiplies the predetermined value of the traveling time (one hour) or the predetermined value (50 km) of the traveling distance in Step S4 by 0.8 to reduce the predetermined value of the traveling time or the predetermined value of the traveling distance, which are used in Step S4, from one hour to 0.8 hour (48 minutes) or from 50 km to 40 km, respectively. When Step S10 is completed, the process advances to Step S11.

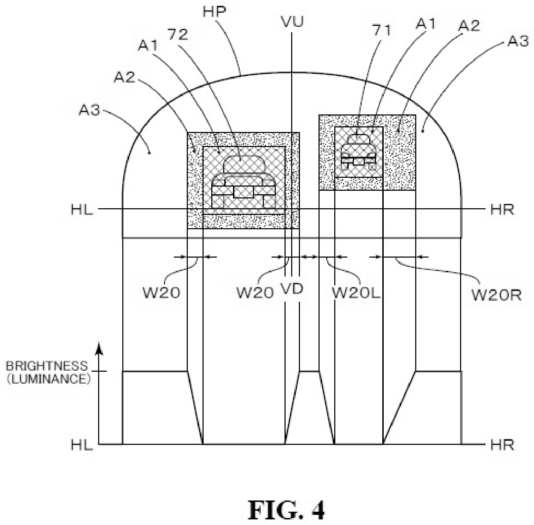

In Step S11, the setting unit 31 sets the light-shielding range A1 and the gradual brightness change range A2 based on the data on the light-shielding range input from the in-vehicle camera device 4. As illustrated in FIG. 4, the light-shielding range A1 is a rectangular range covering the object to be shielded from light, in this example, each of the oncoming vehicle 71 and the preceding vehicle 72. As illustrated in FIG. 4, the gradual brightness change range A2 is a range surrounding the entire periphery, namely, four sides, of each light-shielding range A1. In this example, the widths W20 and W20L of the gradual brightness change ranges A2 are 1° (1 deg).

Further, the light intensity adjustment unit 32 adjusts the light intensities of light emitted from the micro light-emitting elements 21L and 21R of the left-side lamp unit 2L and the right-side lamp unit 2R based on the light-shielding range A1 and the gradual brightness change range A2 that are set by the setting unit 31. In this example, the light intensities of light emitted from the micro light-emitting elements 21L and 21R corresponding to each light-shielding range A1 are set to 0%, the light intensities of light emitted from the micro light-emitting elements 21L and 21R corresponding to the irradiation range A3 are set to 100%, and the light intensities of light emitted from the micro light-emitting elements 21L and 21R corresponding to each gradual brightness change range A2 are set to 0% or more and 100% or less from the light-shielding range A1 side toward the irradiation range A3 side.

Thus, as illustrated in FIG. 4, in the high-beam light distribution pattern HP, the light-shielding ranges A1 respectively covering the oncoming vehicle 71 and the preceding vehicle 72 are formed, and the gradual brightness change ranges A2 are formed at the four sides of the entire peripheries of the light-shielding ranges A1. Further, as illustrated in FIG. 4, in the high-beam light distribution pattern HP, the brightness (luminance) corresponding to the light-shielding range A1 is at the low level, the brightness (luminance) corresponding to the irradiation range A3 is at the high level, and the brightness (luminance) corresponding to the gradual brightness change range A2 is gradually changed in a linear manner from the low level to the high level, from the light-shielding range A1 side toward the irradiation range A3 side.

When Step S11 is completed, the process advances to Step S12. In Step S12, the light-shielding determination unit 337 determines whether or not the light-shielding object is the oncoming vehicle 71. When the light-shielding determination unit 337 determines that the light-shielding object is not the oncoming vehicle 71 (NO), the process of the flow chart illustrated in FIG. 5 ends, and when the light-shielding determination unit 337 determines that the light-shielding object is the oncoming vehicle 71 (YES), the process advances to Step S13.

In Step S13, the setting unit 31 sets the gradual brightness change range A2 in which, among the widths of the gradual brightness change range A2 attached to the light-shielding range A1 covering the oncoming vehicle 71, the width W2R on a side on which the oncoming vehicle 71 travels, in this example, on the right side, is additionally increased by a width of 1° (1 deg). Further, the light intensity adjustment unit 32 adjusts the light intensities of light emitted from the micro light-emitting elements 21L and 21R of the left-side lamp unit 2L and the right-side lamp unit 2R, based on the gradual brightness change range A2 set by the setting unit 31, that is, the gradual brightness change range A2 in which the width W2R on the right side is additionally increased by the width of 1° (1 deg) as compared to the width W2L on the other side.

Thus, as illustrated in FIG. 4, the width W2R on the right side of the gradual brightness change range A2 attached to the light-shielding range A1 covering the oncoming vehicle 71 is additionally increased by 1° (1 deg) as compared to the width W2L (1° (1 deg)) on the other side, and thus becomes 2° (2 deg). Then, Step S13 ends.

In Step S14, the environment determination unit 336 determines whether or not the environment is an adverse environment such as rain or snow. When the environment determination unit 336 determines that the environment is the adverse environment (YES), the process advances to Step S15, and when the environment determination unit 336 determines that the environment is not the adverse environment (NO), the process advances to Step S16.

In Step S15, the control device 3 multiplies the predetermined value of the traveling time (two hours) or the predetermined value (100 km) of the traveling distance in Step S8 by 0.8 to reduce the predetermined value of the traveling time or the predetermined value of the traveling distance, which are used in Step S8, from two hours to 1.6 hours (96 minutes or one hour and 36 minutes) or from 100 km to 80 km, respectively. When Step S15 is completed, the process advances to Step S16.

In Step S16, the setting unit 31 sets the light-shielding range A1 and the gradual brightness change range A2 based on the data on the light-shielding range input from the in-vehicle camera device 4. The light-shielding range A1 is a rectangular range covering the object to be shielded from light, in this example, each of the oncoming vehicle 71 and the preceding vehicle 72 (see FIG. 4). The gradual brightness change range A2 is a range surrounding the entire periphery, namely, four sides, of each light-shielding range A1 (see FIG. 4). In this example, the widths of the gradual brightness change ranges A2 are 1.5° (1.5 deg).

Further, the light intensity adjustment unit 32 adjusts the light intensities of light emitted from the micro light-emitting elements 21L and 21R of the left-side lamp unit 2L and the right-side lamp unit 2R based on the light-shielding range A1 and the gradual brightness change range A2 that are set by the setting unit 31. In this example, the light intensities of light emitted from the micro light-emitting elements 21L and 21R corresponding to each light-shielding range A1 are set to 0%, the light intensities of light emitted from the micro light-emitting elements 21L and 21R corresponding to the irradiation range A3 are set to 100%, and the light intensities of light emitted from the micro light-emitting elements 21L and 21R corresponding to each gradual brightness change range A2 are set to 0% or more and 100% or less from the light-shielding range A1 side toward the irradiation range A3 side.

Thus, in the high-beam light distribution pattern HP, the light-shielding ranges A1 respectively covering the oncoming vehicle 71 and the preceding vehicle 72 are formed, and the gradual brightness change ranges A2 are formed at the four sides of the entire peripheries of the light-shielding ranges A1 (see FIG. 4). Further, in the high-beam light distribution pattern HP, the brightness (luminance) corresponding to the light-shielding range A1 is at the low level, the brightness (luminance) corresponding to the irradiation range A3 is at the high level, and the brightness (luminance) corresponding to the gradual brightness change range A2 is gradually changed in a linear manner from the low level to the high level, from the light-shielding range A1 side toward the irradiation range A3 side (see FIG. 4).

When Step S16 is completed, the process advances to Step S17. In Step S17, the light-shielding determination unit 337 determines whether or not the light-shielding object is the oncoming vehicle 71. When the light-shielding determination unit 337 determines that the light-shielding object is not the oncoming vehicle 71 (NO), the process of the flow chart illustrated in FIG. 5 ends, and when the light-shielding determination unit 337 determines that the light-shielding object is the oncoming vehicle 71 (YES), the process advances to Step S18.

In Step S18, the setting unit 31 sets the gradual brightness change range A2 in which, among the widths of the gradual brightness change range A2 attached to the light-shielding range A1 covering the oncoming vehicle 71, the width W2R on a side on which the oncoming vehicle 71 travels, in this example, on the right side, is additionally increased by a width of 1° (1 deg). Further, the light intensity adjustment unit 32 adjusts the light intensities of light emitted from the micro light-emitting elements 21L and 21R of the left-side lamp unit 2L and the right-side lamp unit 2R, based on the gradual brightness change range A2 set by the setting unit 31, that is, the gradual brightness change range A2 in which the width W2R on the right side is additionally increased by the width of 1° (1 deg) as compared to the width W2L on the other side.

Thus, the width W2R on the right side of the gradual brightness change range A2 attached to the light-shielding range A1 covering the oncoming vehicle 71 is additionally increased by the width of 1° (1 deg) as compared to the width W2L (1.5° (1.5 deg)) on the other side, and thus becomes 2.5° (2.5 deg). Then, Step S18 ends (see FIG. 4). Consequently, the actions of the vehicle headlamp device 1 according to this embodiment end.

### (Description of Effects of Embodiment)

The vehicle headlamp device 1 according to this embodiment has such a configuration and actions as described above, and effects thereof are described below.

The vehicle headlamp device 1 according to this embodiment includes the left-side lamp unit 2L and the right-side lamp unit 2R that irradiate the front of the vehicle with the high-beam light distribution pattern HP, and the control device 3. The control device 3 controls the left-side lamp unit 2L and the right-side lamp unit 2R, based on information obtained by the in-vehicle camera device 4 serving as a detection device, that is, the data on the light-shielding range A1, to form the light-shielding range A1 in the high-beam light distribution pattern HP and to form the gradual brightness change range A2 at an illumination range adjacent to the light-shielding range A1 and at the four sides of the entire periphery of the light-shielding range A1.

As a result, the vehicle headlamp device 1 according to this embodiment can alleviate a difference in brightness between the light-shielding range A1 and the irradiation range A3 by the gradual brightness change range A2 formed between the light-shielding range A1 and the irradiation range A3. This enables the vehicle headlamp device 1 according to this embodiment to reduce fatigue caused to a driver during night driving, as compared to the vehicle headlamp of Patent Literature 1 in which the difference in brightness is large at the boundary between the light-shielding range and the irradiation range in the high-beam light distribution pattern and the headlamp control device of Patent Literature 2 in which the difference in brightness is large at the boundary between the high-beam region that is increased in amount of light and the non-irradiation region.

Moreover, the vehicle headlamp device 1 according to this embodiment can reduce fatigue caused to the driver during night driving even when the light-shielding ranges A1 and the gradual brightness change ranges A2 move in accordance with the movement of the oncoming vehicle 71 and the preceding vehicle 72, which are the objects, due to the action of alleviating the difference in brightness of the gradual brightness change range A2 or even when there are a plurality of oncoming vehicles 71 and preceding vehicles 72, which are the objects, and there are a plurality of light-shielding ranges A1 and gradual brightness change ranges A2.

In the vehicle headlamp device 1 according to this embodiment, when information relating to a degree of fatigue of the driver is input from the vehicle information unit 5 and it is determined that the information relating to the degree of fatigue of the driver is equal to or greater than a predetermined value, the control device 3 outputs, to the left-side lamp unit 2L and the right-side lamp unit 2R, control signals for increasing the widths W2, W2L, and W2R of 0.5° (0.5 deg) between the light-shielding ranges A1 and the irradiation range A3, which are the widths of the gradual brightness change ranges A2, to the widths W20, W20L, and W20R of 1° (1 deg) or 1.5° (1.5 deg).

As a result, the vehicle headlamp device 1 according to this embodiment increases, before the degree of fatigue of the driver is accumulated, the widths W20, W20L, and W20R of the gradual brightness change ranges A2, namely, ranges for alleviating the difference in brightness, thereby enabling reduction in fatigue caused to the driver during long-time night driving.

Moreover, in the vehicle headlamp device 1 according to this embodiment, the widths W2, W2L, and W2R of the gradual brightness change ranges A2 are each the minimum width of 0.5° (0.5 deg) until the information relating to the degree of fatigue of the driver becomes equal to or greater than the predetermined value, and hence it is possible to realize that the ADB is mounted on the vehicle, thereby maintaining a commercial value of the vehicle at a high value.

In the vehicle headlamp device 1 according to this embodiment, the information relating to the degree of fatigue of the driver is the traveling time or the traveling distance among pieces of vehicle information obtained by the vehicle information unit 5, and when a value of the traveling time or the traveling distance equal to or greater than the predetermined value (one hour or two hours, or 50 km or 100 km) serving as the threshold value is input from the vehicle information unit 5, the control device 3 outputs the control signals for increasing the widths W2, W2L, and W2R of 0.5° (0.5 deg) of the gradual brightness change ranges A2 to the widths W20, W20L, and W20R of 1° (1 deg) or 1.5° (1.5 deg) to the left-side lamp unit 2L and the right-side lamp unit 2R.

As a result, in the vehicle headlamp device 1 according to this embodiment, the traveling time or the traveling distance is used as the information relating to the degree of fatigue of the driver, and hence it is possible to accurately grasp the degree of fatigue of the driver, and to reduce fatigue caused to the driver during night driving.

In the vehicle headlamp device 1 according to this embodiment, the control device 3 obtains the environment information on the vehicle from the environment information unit 6, and reduces the predetermined value when the obtained environment information is adverse environment information relating to adverse weather. That is, the control device 3 multiplies the predetermined value of the information relating to the degree of fatigue of the driver by 0.8 to reduce the predetermined value of the information relating to the degree of fatigue of the driver, and, when the traveling time or the traveling distance has become equal to or greater than the reduced predetermined value (0.8 hour (48 minutes) or 1.6 hours (96 minutes or one hour and 36 minutes), or 40 km or 80 km), outputs the control signals for increasing the widths W2, W2L, and W2R of 0.5° (0.5 deg) of the gradual brightness change ranges A2 to the widths W20, W20L, and W20R of 1° (1 deg) or 1.5° (1.5 deg) to the left-side lamp unit 2L and the right-side lamp unit 2R.

As a result, the vehicle headlamp device 1 according to this embodiment reduces, when the fatigue of the driver is accelerated under an adverse environment such as rain or snow, the predetermined value of the traveling time or the traveling distance, which is the information relating to the degree of fatigue of the driver, thereby enabling reduction in fatigue caused to the driver during night driving under the adverse environment.

In the vehicle headlamp device 1 according to this embodiment, the control device 3 outputs, to the left-side lamp unit 2L and the right-side lamp unit 2R, control signals for increasing, among the widths of the gradual brightness change range A2 attached to the light-shielding range A1 for shielding the oncoming vehicle 71 from light, the widths W2R, W20R, and W21R on the side on which the oncoming vehicle 71 travels by 1° (1 deg) as compared to the widths W2L, W20L, and W21L on the other side.

As a result, in the vehicle headlamp device 1 according to this embodiment, among the widths of the gradual brightness change range A2, the widths W2R, W20R, and W21R on the side on which the oncoming vehicle 71 travels are greater by 1° (1 deg) as compared to the widths W2L, W20L, and W21L on the other side, and hence even when a relative speed between the own vehicle and the oncoming vehicle 71 is high and a positional movement on the traveling direction side of the oncoming vehicle 71 is large, it is possible to shield the oncoming vehicle 71 in the gradual brightness change range A2, and to suppress glare to the oncoming vehicle 71.

In the vehicle headlamp device 1 according to this embodiment, the control device 3 outputs, to the left-side lamp unit 2L and the right-side lamp unit 2R, control signals for setting a gradual change form of the brightness of the gradual brightness change range A2 between the light-shielding range A1 and the irradiation range A3 to a linear form.

As a result, the vehicle headlamp device 1 according to this embodiment gradually changes, in a smooth linear manner, the brightness of the gradual brightness change range A2 between the light-shielding range A1 and the irradiation range A3, thereby enabling reduction in fatigue caused to the driver during night driving.

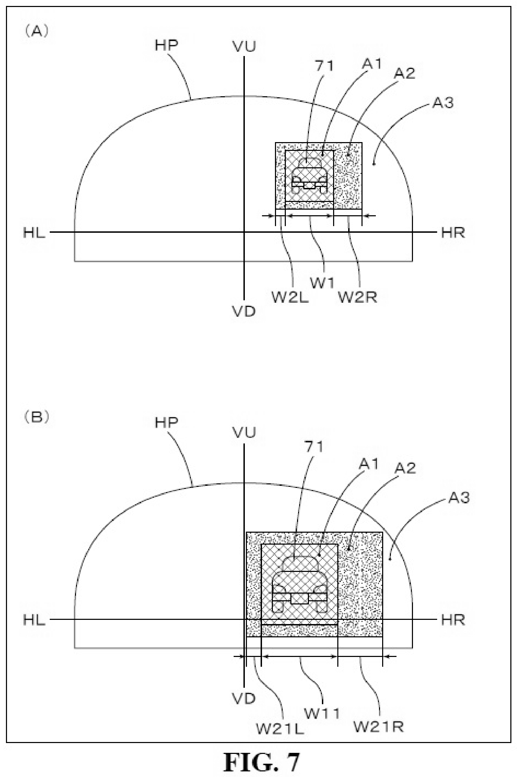

In the vehicle headlamp device 1 according to this embodiment, as illustrated in FIG. 7(A) and FIG. 7(B), the control device 3 outputs, to the left-side lamp unit 2L and the right-side lamp unit 2R, control signals for increasing or decreasing the widths W2L, W2R, W21L, and W21R between the light-shielding range A1 and the irradiation range A3, which are the widths of the gradual brightness change range A2, in accordance with widening or narrowing of left-right-direction widths W1 and W11 of the light-shielding range A1.

As a result, in the vehicle headlamp device 1 according to this embodiment, when the left-right-direction width of the light-shielding range A1 has become 1.5 times larger from W1 of FIG. 7(A) to W11 of FIG. 7(B), the other-side width of the gradual brightness change range A2 is increased 1.5 times from 0.5° of W2L of FIG. 7(A) to 0.75° of W21L of FIG. 7(B), while the width of the gradual brightness change range A2 on the side on which the oncoming vehicle 71 travels is increased 1.5 times from 1.5° of W2R of FIG. 7(A) to 2.25° of W21R of FIG. 7(B). Thus, in the vehicle headlamp device 1 according to this embodiment, the light-shielding range A1 and the gradual brightness change range A2 are widened or narrowed at the same ratio, and hence balance between the light-shielding range A1 and the gradual brightness change range A2 is maintained and visually preferred.

In the vehicle headlamp device 1 according to this embodiment, the control device 3 includes the setting unit 31 that sets the light-shielding range A1 and the gradual brightness change range A2 based on the information input from the in-vehicle camera device 4 serving as the detection device, that is, the data on the light-shielding range A1, and the light intensity adjustment unit 32 that adjusts the light intensities of light emitted from the micro light-emitting elements 21L and 21R based on the light-shielding range A1 and the gradual brightness change range A2 that are set by the setting unit 31.

As a result, the vehicle headlamp device 1 according to this embodiment can form, in the high-beam light distribution pattern HP, the light-shielding range A1 and the gradual brightness change range A2 provided at the four sides of the entire periphery of the light-shielding range A1.

In the vehicle headlamp device 1 according to this embodiment, the left-side lamp unit 2L and the right-side lamp unit 2R include the micro light-emitting elements 21L and 21R in each of which a plurality of LEDs are arranged in a matrix, and the optical members 22L and 22R serving as the lenses that irradiate the front of the vehicle with light from the micro light-emitting elements 21L and 21R directly as the high-beam light distribution pattern HP.

As a result, the vehicle headlamp device 1 according to this embodiment can form, in the high-beam light distribution pattern HP, the light-shielding range A1 and the gradual brightness change range A2 provided at the four sides of the entire periphery of the light-shielding range A1.

### (Description of Example Other than Embodiment)

In the above-mentioned embodiment, the example in which the gradual brightness change range A2 is formed around the entire periphery of the light-shielding range A1 has been described. However, the present invention is also applicable to a case in which the gradual brightness change range A2 is formed in at least a part of the irradiation range A3 adjacent to the light-shielding range A1, for example, a part on the traveling direction side of the oncoming vehicle 71 or a part on the traveling direction side of the preceding vehicle 72.

In addition, in the above-mentioned embodiment, the example of left-hand traffic has been described. However, the present invention is also applicable to a case of right-hand traffic. In this case, left and right in the above-mentioned embodiment are reversed.

Further, in the above-mentioned embodiment, the example in which any one of the traveling time or the traveling distance is used as the vehicle information has been described. However, in the present invention, both the traveling time and the traveling distance may be used as the vehicle information.

Still further, in the above-mentioned embodiment, the widths W2, W2L, and W2R of 0.5° (0.5 deg) of the gradual brightness change ranges A2 are increased in two stages to the widths W20, W20L, and W20R of 1° (1 deg) or 1.5° (1.5 deg). However, in the present invention, numerical values of the gradual brightness change ranges A2 may be numerical values other than the above-mentioned numerical values, and the widths may be increased in one stage or in three or more stages, instead of being increased in two stages.

Still further, in the above-mentioned embodiment, the predetermined value of the traveling time or the traveling distance has two stages of one hour and two hours or 50 km and 100 km. However, in the present invention, the numerical value of the predetermined value of the traveling time or the traveling distance may be a numerical value other than the above-mentioned numerical values, and may have one stage or three or more stages instead of the two stages.

Still further, in the above-mentioned embodiment, when the environment is an adverse environment such as rain or snow, the predetermined value of the information relating to the degree of fatigue of the driver is multiplied by 0.8 in order to reduce the predetermined value of the information relating to the degree of fatigue of the driver. However, in the present invention, the numerical value by which the predetermined value is to be multiplied may be a numerical value other than the above-mentioned numerical value.

Still further, in the above-mentioned embodiment, among the widths of the gradual brightness change range A2 attached to the light-shielding range A1 for shielding the oncoming vehicle 71 from light, the widths W2R, W20R, and W21R on the side on which the oncoming vehicle 71 travels are increased by 1° (1 deg) as compared to the widths W2L, W20L, and W21L on the other side. However, in the present invention, the numerical value by which the width is to be increased may be a numerical value other than the above-mentioned numerical value. Further, in the present invention, the numerical value by which the width is to be increased may be changed depending on the relative speed between the own vehicle and the oncoming vehicle 71. For example, when the relative speed is high, the width is additionally increased by an angle larger than 1°, and when the relative speed is low, the width is additionally increased by an angle smaller than 1°.

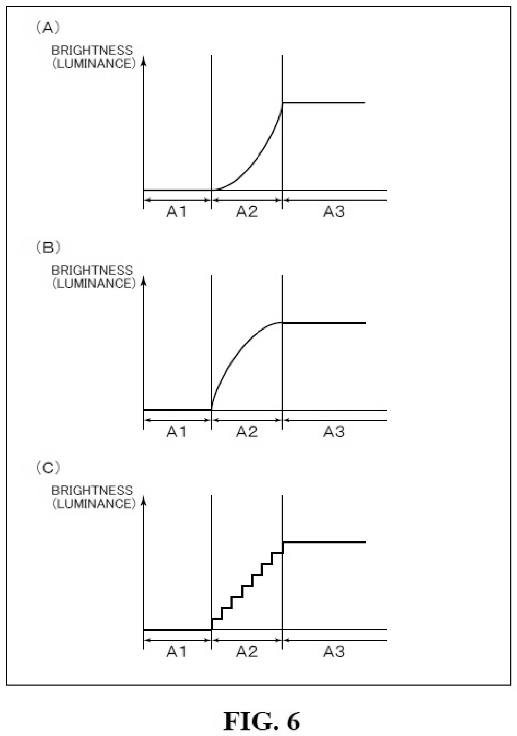

Still further, in the above-mentioned embodiment, the brightness of the gradual brightness change range A2 between the light-shielding range A1 and the irradiation range A3 is gradually changed in a smooth linear manner as illustrated in FIG. 3 and FIG. 4. However, in the present invention, in addition to the linear form, the gradual change form of the brightness of the gradual brightness change range A2 between the light-shielding range A1 and the irradiation range A3 may be, for example, a concave-downward-curve-like form, a concave-upward-curve-like form, or a stepwise form as illustrated in FIG. 6(A), FIG. 6(B), and FIG. 6(C). Further, the gradual change form may be a combination of the linear form, the concave-downward-curve-like form, the concave-upward-curve-like form, and the stepwise form. In this manner, in the present invention, when the gradual change form of the brightness of the gradual brightness change range A2 between the light-shielding range A1 and the irradiation range A3 is set to any gradual change form, it is possible to select the gradual change form suitable for preference of the driver, and to reduce fatigue caused to the driver during night driving.

Still further, in the above-mentioned embodiment, the example in which the micro light-emitting elements 21L and 21R of the left-side lamp unit 2L and the right-side lamp unit 2R are formed of a plurality of micro LEDs and the plurality of micro LEDs are arranged in a matrix has been described. However, in the present invention, as the micro light-emitting elements, in addition to the micro LEDs, MEMS-type micro light-emitting elements or DMD-type micro light-emitting elements may be used.

Still further, in the above-mentioned embodiment, even when the light-shielding range A1 is widened or narrowed, the widths of the gradual brightness change range A2 are constant. However, in the present invention, the control device 3 may perform control so that, as described later, when the light-shielding range A1 is widened or narrowed, the widths of the gradual brightness change range A2 are increased or decreased in accordance with the widening or narrowing.

That is, as illustrated in FIG. 7(A) and FIG. 7(B), the light-shielding range A1 is widened or narrowed in accordance with a distance to the object to be shielded from light, which is the oncoming vehicle 71 in FIGS. 7. For example, when the distance to the oncoming vehicle 71 is long, as illustrated in FIG. 7(A), the light-shielding range A1 is narrow, that is, the left-right-direction width W1 of the light-shielding range A1 is narrow. In contrast, when the distance to the oncoming vehicle 71 is short, as illustrated in FIG. 7(B), the light-shielding range A1 is wide, that is, the left-right-direction width W11 of the light-shielding range A1 is wide. In this manner, the light-shielding range A1 is widened or narrowed in accordance with the distance to the object (the oncoming vehicle 71) to be shielded from light. At this time, when the widths of the gradual brightness change range A2 are constant while the light-shielding range A1 is widened or narrowed, balance between the widened-or-narrowed light-shielding range A1 and the constant gradual brightness change range A2 is lost, which is not visually preferred.

In view of this, as illustrated in FIG. 7(A) and FIG. 7(B), the control device 3 outputs, to the left-side lamp unit 2L and the right-side lamp unit 2R, the control signals for increasing or decreasing the widths W2L, W2R, W21L, and W21R between the light-shielding range A1 and the irradiation range A3, which are the widths of the gradual brightness change range A2, in accordance with the widening or narrowing of the light-shielding range A1, in this example, the widening or narrowing of the left-right-direction widths W1 and W11. For example, when the left-right-direction width of the light-shielding range A1 has become 1.5 times larger from W1 of FIG. 7(A) to W11 of FIG. 7(B), the other-side width of the gradual brightness change range A2 is increased 1.5 times from 0.5° of W2L of FIG. 7(A) to 0.75° of W21L of FIG. 7(B), while the width of the gradual brightness change range A2 on the side on which the oncoming vehicle 71 travels is increased 1.5 times from 1.5° of W2R of FIG. 7(A) to 2.25° of W21R of FIG. 7(B). Thus, the light-shielding range A1 and the gradual brightness change range A2 are widened or narrowed at the same ratio, and hence the balance between the light-shielding range A1 and the gradual brightness change range A2 is maintained and visually preferred.

The present invention is not limited to the above-mentioned embodiment.

### Reference Signs List

1 vehicle headlamp device
2L left-side lamp unit
2R right-side lamp unit
21L, 21R micro light-emitting element
22L, 22R optical member
3 control device
31 setting unit
32 light intensity adjustment unit
33 determination unit
331 during-traveling determination unit (traveling determination unit)
332 night-traveling determination unit (night determination unit)
333 use-of-ADB determination unit (ADB determination unit)
334 predetermined-traveling-time-value determination unit (time determination unit)
335 predetermined-traveling-distance-value determination unit (distance determination unit)
336 environment determination unit
337 light-shielding-object determination unit (light-shielding determination unit)
4 in-vehicle camera device
41 image pickup unit
42 image processing unit
43 object detection unit
44 light-shielding range calculation unit
5 vehicle information unit
6 environment information unit
71 oncoming vehicle
72 preceding vehicle
A1 light-shielding range
A2 gradual brightness change range
A3 irradiation range
HL-HR horizontal line extending between left side to right side of screen
HP high-beam light distribution pattern
VU-VD vertical line extending between upper side to lower side of screen
W1, W11 left-right-direction width of light-shielding range A1
W2, W20 width of left-side portion and width of right-side portion of gradual brightness change range A2 on preceding vehicle 72 side
W2L, W20L, W21L width of left-side portion of gradual brightness change range A2 on oncoming vehicle 71 side
W2R, W20R, W21R width of right-side portion of gradual brightness change range A2 on oncoming vehicle 71 side

## Claims

1. A vehicle headlamp device of a variable light distribution type, the vehicle headlamp device comprising:
a lamp unit configured to irradiate a front of a vehicle with a high-beam light distribution pattern; and
a control device configured to control the lamp unit based on information obtained by a detection device mounted on the vehicle to form a light-shielding range in the high-beam light distribution pattern and to form a gradual brightness change range in at least a part of an irradiation range adjacent to the light-shielding range.

2. The vehicle headlamp device according to claim 1, wherein the control device is configured to output, to the lamp unit, a control signal for increasing a width of the gradual brightness change range, when information relating to a degree of fatigue of a driver is input from an information unit mounted on the vehicle and it is determined that the information relating to the degree of fatigue of the driver is equal to or greater than a threshold value.

3. The vehicle headlamp device according to claim 2,
wherein the information relating to the degree of fatigue of the driver comprises at least any one of a traveling time or a traveling distance among pieces of vehicle information obtained by the information unit, and
wherein the control device is configured to output, to the lamp unit, the control signal for increasing the width of the gradual brightness change range, when a value of at least any one of the traveling time or the traveling distance that is equal to or greater than the threshold value is input from the information unit.

4. The vehicle headlamp device according to claim 2, wherein the control device is configured to obtain environment information on the vehicle from the information unit, and decrease the threshold value when the obtained environment information is information relating to adverse weather.

5. The vehicle headlamp device according to claim 4,
wherein the information relating to the degree of fatigue of the driver comprises at least any one of a traveling time or a traveling distance among pieces of vehicle information obtained by the information unit, and
wherein the control device is configured to obtain the environment information on the vehicle from the information unit, and decrease the threshold value when the obtained environment information is information relating to adverse weather.

6. The vehicle headlamp device according to claim 1, wherein the control device is configured to output, to the lamp unit, a control signal for increasing a width of the gradual brightness change range on a side on which an oncoming vehicle travels compared to a width of the gradual brightness change range on another side.

7. The vehicle headlamp device according to claim 1, wherein the control device is configured to output, to the lamp unit, a control signal for setting a gradual change form of a brightness of the gradual brightness change range to at least one form of a linear form, a curve-like form, or a stepwise form.

8. The vehicle headlamp device according to claim 1, wherein the control device is configured to output, to the lamp unit, a control signal for increasing or decreasing a width of the gradual brightness change range in accordance with widening or narrowing of the light-shielding range.

9. The vehicle headlamp device according to claim 1, wherein the control device includes:
a setting unit configured to set the light-shielding range and the gradual brightness change range based on the information input from the detection device; and
a light intensity adjustment unit configured to adjust a light intensity of light emitted from the lamp unit based on the light-shielding range and the gradual brightness change range that are set by the setting unit.
